# EUROPEAN PATENT SPECIFICATION

(11) **EP 2 796 299 B1**
(45) Date of publication and mention of the grant of the patent: **07.02.2018**
(21) Application number: 12859524.6
(22) Date of filing: 10.12.2012
(51) Int. Cl.: C08K 3/34, C08K 7/02, C08K 3/04, C08L 21/00, B60C 1/00, B60C 13/00

(54) **TIRE FOR HEAVY LOADS**
REIFEN FÜR SCHWERE LASTEN
PNEU POUR CHARGES LOURDES

(30) Priority: 22.12.2011 JP 2011282082
(43) Date of publication of application: 29.10.2014
(73) Proprietor: Bridgestone Corporation, Tokyo 104-8340 (JP)
(72) Inventor: YAMADA, Takeshi, Kodaira-shi Tokyo 187-8531 (JP)
(74) Representative: Oxley, Robin John George
(86) International application number: PCT/JP2012/007875
(87) International publication number: WO 2013/094147

(56) References cited:
- EP-A1- 1 990 218
- JP-A- H01 135 847
- JP-A- H06 328 912
- JP-A- H08 325 411
- JP-A- 2009 202 865
- JP-A- 2009 269 962
- JP-A- 2010 168 540
- US-B1- 6 598 645
- DATABASE WPI Week 200425 12 January 2004 (2004-01-12) Thomson Scientific, London, GB; AN 2004-261173 XP002737901, -& JP 2004 027003 A (SUMITOMO RUBBER IND LTD) 29 January 2004 (2004-01-29)

## Description

### Technical Field

The present invention relates to heavy-duty tires applicable to passenger cars, trucks, busses, industrial vehicles, construction vehicles, aircrafts, etc., and adapted to achieve improvement in anti-cut resistance and resistance to crack growth toward inside of the tire.

### Background Art

As widely known in the art, external injuries in the tire side portion, such as the tire sidewall portion, may reach ply cords to cause detrimental tire defects due to cutting of the cords or internal piercing. Thus, it has been considered highly important to improve the anti-cut resistance and resistance to crack growth toward inside of the tire, and various technologies have been developed in order to overcome such a problem.

Large-sized tires for a heavy load, in particular, are frequently subjected to injuries due to the surface cutting that occurs as the tire steps over stones, and the injured cuts tends to grow inwards. Thus, for large-sized tires, it would be highly advantageous to improve the anti-cut resistance and resistance to crack growth so as to prolong the service life of the tires. Moreover, because large-sized tires have a large mass, it would be desirable to improve the heat generation property as well.

As a technology for improving the anti-cut resistance, low heat generation property and resistance to crack growth, for example, Patent Document 1 discloses a rubber composition for tire sidewall portions including a rubber component and white fillers, wherein the rubber composition exhibits a sea-island structure comprised of a continuous phase and one or more discontinuous phases, and wherein the white fillers are unevenly distributed in at least one of the discontinuous phases.

Patent Document 2 discloses a rubber composition for tire sidewall portions including 100 parts by mass of rubber component, not more than 5 parts by mass of carbon black, 10 - 40 parts by mass of silica, and 5 - 30 parts by mass of inorganic filler component comprising at least one type of inorganic fillers other than carbon black and silica, wherein the rubber component is comprised of either a natural rubber or a modified natural rubber.

Patent Document 3 discloses a rubber composition for tire sidewall portions including 5 to 50 parts by mass of platy mica, per 100 parts by mass of the basic rubber, wherein the platy mica has an average particle size of 10 µm - 100 µm and is oriented perpendicularly to the tire circumferential direction.

Patent Document 4 discloses a rubber composition for tire sidewall portions including 5 to 50 parts by mass of platy natural ore, per 100 parts by mass of the rubber component, wherein the platy mica has an average particle size of 10 µm - 100 µm.

### (Patent Documents)

Patent Document 1: JP 2006-348222 A
Patent Document 2: JP 2008-303326 A
Patent Document 3: JP 2004-027003 A
Patent Document 4: JP 2003-292685 A

EP 1 990 218 discloses a run flat tire that comprises a sidewall-reinforcing layer prepared by using a rubber composition comprising non-metallic short fibers having an average fiber diameter of 1 to 100 µm and an average fiber length of 0.1 to 20 mm in an amount of 5 to 120 parts by weight on the basis of 100 parts by weight of a diene rubber. The non-metallic short fibers are oriented in the circumferential direction of the tire.

US 6,598,645 discloses a tire with at least one component of a rubber composition which contains oriented exfoliated platelets derived from an intercalated clay. Such tire components may be, for example, a rubber/cord laminate and, optionally, a sidewall insert and optionally, an apex.

JP 2009 202865 discloses a pneumatic tire that has sidewalls formed from a rubber composition which includes natural rubber and a diene rubber ingredient comprising syndiotactic 1, 2-polybutadiene. This pneumatic tire has sidewalls each obtained by laminating rubber sheets extruded in a thickness or equal to 1.5 mm from a rubber composition for sidewall formation.

JP2009 269962 discloses a rubber composition for a sidewall of a tire that allows inhibiting the development of a bare, while maintaining an appropriate flexural fatigue resistance and low heat generation properties even in the case of blending regenerated rubber.

### Disclosure of the Invention

### (Problem)

However, the technology according to Patent Documents 1 and 2 aims primarily at reduction of the blending quantity of carbon black as an environmental measure, which leads to degradation of the interactive reinforcing property with polymer. Thus, even though the resistance to crack growth can be supplemented, this solution is not very suitable for large-sized tires, and there still remains the problem that anti-cut resistance cannot be sufficiently improved.

The technology according to Patent Document 3 is featured by its orientation direction that serves to prevent formation of ozone-based cracks. On the other hand, however, this orientation direction is disadvantageous from the viewpoint of crack growth in the depth direction of the tire and would not provide sufficient performance for large-sized tires.

Finally, the technology according to Patent Document 4 is featured by a large average particle size of the platy natural ores blended in the rubber composition, which does provide air permeability, but leaves the problem that the anti-cut resistance deteriorates and the resistance to crack growth tends to be insufficient.

Therefore, it is a primary object of the present invention to provide a heavy-duty tire exhibiting satisfactory anti-cut resistance and low heat generation property, as well as excellent resistance to crack growth toward inside of the tire.

### (Solution)

The inventors conducted thorough investigations seeking for solution of the above-mentioned problem. As a result, it has been found that inclusion, in the rubber composition forming the tire side portion, of orientation material oriented in the tire circumferential direction serves to provide sufficiently low heat generation property. It has also been found that, by designing the tire side portion to have an average thickness as large as 8 mm - 150 mm, it is possible to realize a satisfactory anti-cut resistance and suppress the growth of the cracks toward inside of the tire (i.e., toward the ply cords). Such findings led the inventors to complete the present invention.

The present invention has been achieved based on the above-mentioned findings, and is featured by novel aspects as follows.
(1) A first aspect of the present invention resides in a heavy-duty tire, characterized by a tire side portion that comprises a rubber composition containing 0.1 - 30 parts by mass of an orientation material oriented in a circumferential direction of the tire in which a longitudinal direction of the orientation material is substantially aligned with the tire circumferential direction, per 100 parts by mass of a rubber component, wherein the tire side portion has an average thickness of 8 mm - 150 mm, wherein the orientation material comprises a platy mineral and wherein the platy mineral has an average particle size within a range of 0.2 µm - 10 µm.
(2) A second aspect of the present invention resides in a heavy-duty tire according to the first aspect, characterized in that the tire side portion comprises a sidewall portion.
(3) A third aspect of the present invention resides in a heavy-duty tire according to the fifth aspect, characterized in that the platy mineral has an average particle size within a range of 2 µm - 5 µm.
(4) A fourth aspect of the present invention resides in a heavy-duty tire according to the fourth aspect, characterized in that the platy mineral has a ratio of its longitudinal length to its thickness, said ratio being not less than 8.
(5) A fifth aspect of the present invention resides in a heavy-duty tire according to the first aspect, characterized in that said rubber component contains not less than 25 % by mass of a natural rubber.
(6) A sixth aspect of the present invention resides in a heavy-duty tire according to the first aspect, characterized in that said rubber composition further comprises 30 - 65 parts by mass of carbon black having nitrogen- absorbing specific surface area of 40 m²/g - 120 m²/g and dibutyl phthalate oil absorption of 70 ml / 100 g - 120 ml / 100 g.

### (Technical Effects)

According to the present invention, there is provided a heavy-duty tire exhibiting satisfactory anti-cut resistance and low heat generation property, as well as excellent resistance to crack growth toward inside of the tire.

### Brief Description of the Drawings

FIG. 1 is a widthwise sectional view schematically showing part of the heavy-duty tire according to an embodiment of the present invention; and
FIG. 2 is a sectional view schematically showing part of the tread portion of the heavy-duty tire according to the present invention.

### Preferred Embodiment of the Invention

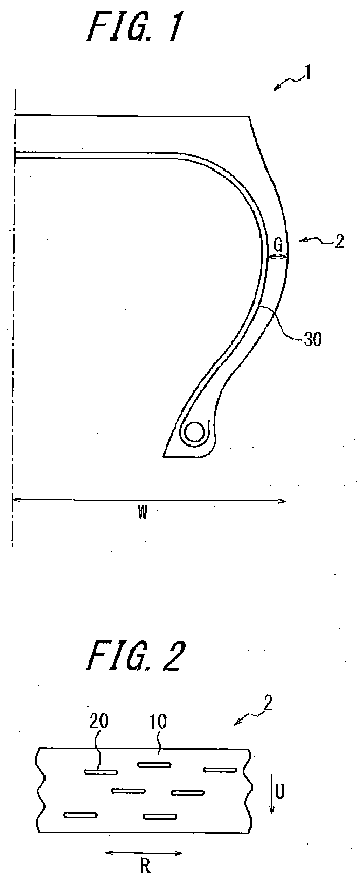

Now, explanation will be made of the structural features of the present invention, as well as the basis for various limitations. In the drawings, FIG. 1 is a widthwise sectional view schematically showing part of the heavy-duty tire according to an embodiment of the present invention; and FIG. 2 is a sectional view schematically showing part of the tread portion of the heavy-duty tire according to the present invention.

The present invention provides a heavy-duty tire which includes, as shown in FIG. 1, tire side portions comprised of a predetermined rubber composition. As used herein, the term "side portion" refers to that region of the tire, which is situated on each side of the tire as seen in the widthwise sectional view thereof, i.e., the region extending between the tread end and the bead portion.

With reference to FIG. 2, according to embodiments of the present invention, the rubber composition that forms the tire side portions includes 0.1 to 30 parts by mass of orientation material 20 oriented in the tire circumferential direction R, per 100 parts by mass of the rubber component 10, and the side portion of the tire has an average thickness G of 8 to 150 mm. Due to the inclusion of the orientation material 20 oriented in the tire circumferential direction R, it is possible to preserve a satisfactory low heat generation property. Moreover, due to the average thickness of the tire side portion 2, which is made as thick as 8 mm or more, it is possible to disperse the input applied to the tip of the crack into the tire circumferential direction R and thereby change the growing direction of cracks. As a result, it is possible to realize excellent anti-cut resistance and effectively suppress the growth of cracks toward inside U of the tire (i.e., toward the ply cords 30).

### < Rubber Composition >

As mentioned above, the rubber composition that forms the side portions of the heavy-duty tire according to the present invention includes 0.1 to 30 parts by mass of orientation material 20 oriented in the tire circumferential direction R, per 100 parts by mass of the rubber component 10.

### (Rubber Component)

There are no particular limitations on the rubber component. Thus, for example, from the viewpoint of achieving excellent anti-cut property and crack growing property, it is preferred to use diene rubber. The diene rubber may be natural rubber (NR), polyisoprene rubber (IR), styrene-butadiene rubber (SBR), polybutadiene rubber (BR), etc. In particular, natural rubber is highly suitable. There may be used one kind of diene rubber alone, or two or more kinds may be blended.

Furthermore, from the viewpoint of suppressing growth of cracks toward inside of the tire, it is preferred that the rubber component contains not less than 25% by mass of natural rubber. If the natural rubber content is less than 25% by mass, there is a risk that a sufficient resistance to crack growth may not be achieved.

### (Orientation Material)

The orientation material is included in the above-mentioned rubber composition, in order to realize sufficient anti-cut resistance and low heat generation property, and also to suppress the crack growth toward inside of the tire.

The content of the orientation material in the above-mentioned rubber composition is within a range of 0.1 - 30 parts by mass, per 100 parts by mass of the rubber component, preferably within a range of 2 - 20 parts by mass, more preferably within a range of 2 - 15 parts by mass, further more preferably within a range of 2 - 10 parts by mass, and most optimally within a range of 2- 5 parts by mass. If the content of the orientation material is less than 0.1 parts by mass, due to an insufficient amount of the orientation material, a sufficient resistance to the crack growth toward inside of the tire cannot be achieved. On the other hand, it the content of the orientation material exceeds 30 parts by mass, the heat generation property begins to be worse, a sufficient reinforcing effect cannot be achieved, the resistance to the crack growth is significantly degraded, and the appearance of the tire is impaired.

Here, the orientation material refers to a material which, as shown in FIG. 2, has a large aspect ratio and is of a needle-like, fiber-like or plate-like shape and is adjusted when incorporated into the rubber at the tire side portion such that the longitudinal direction of the orientation material is substantially aligned with the tire circumferential direction. In this instance, the orientation material is arranged in parallel with the tire circumferential direction, because if the orientation material is oriented in directions other than the tire circumferential direction, an improved resistance to the crack growth toward the inside of the tire is not achieved. More particularly, the orientation material may be long fibers, short fibers, organic fillers, inorganic fillers, etc. Among others, from the viewpoint of effective suppression of crack growth toward the inside of tires, it is preferred that the orientation material comprises short fibers or inorganic fillers. Incidentally, the short fibers refer to organic short fibers comprised of aliphatic polyamide-, aromatic polyamide-, polyester-, polyolefin-, polyvinyl alcohol-, or cellulose-short fibers.

When inorganic fillers are used as the orientation material, it is preferred that the inorganic fillers are comprised of platy mineral, since such material exhibits excellent anti-cut resistance and suppresses the crack growth toward the inside of the tires.

It is preferred that the platy mineral has an average particle diameter within a range of 0.2 - 10 µm, more preferably within a range of 2 - 5 µm. If the average particle diameter is less than 0.2 µm, the suppression of crack growth toward inside of the tires is degraded. On the other hand, if the average particle diameter exceeds 10 µm, the anti-cut resistance is degraded and the suppression of crack growth is insufficient. It is noted that the average particle diameter refers to the particle diameter as determined by measurement by means of laser diffraction analysis, and is an average value of particle diameters for an arbitrary number of particles (e.g., 10 particles).

As for the shape of the platy minerals, it is preferred that the ratio of the longer diameter to the thickness is not less than 8. This ratio serves to effectively suppress the crack growth toward inside of the tires. It is preferred that the thickness of the platy mineral is within a range of 2 - 10 µm.

### (Additives)

Other than the rubber component and the orientation material as mentioned above, the tuber composition may also contain, for example, carbon black, cross-linking agent, vulcanization accelerator, softener, antioxidant agent, silane coupling agent, etc.

Carbon black may be included in the rubber composition in order to improve the strength of the tire. It is preferred that the rubber composition includes carbon black having nitrogen-absorbing specific surface area of 40 m²/g - 120 m²/g, and dibutyl phthalate oil absorption of 70 ml / 100 g - 120 ml / 100 g, in view of achieving further improved anti-cut resistance and crack growth suppression property. It is also preferred that the content of carbon black is within a range of 30 - 65 parts by mass, per 100 parts by mass of the rubber component. If the carbon black content is less than 30 parts by mass, sufficient anti-cut resistance and crack growth suppression property are not achieved. On the other hand, if the carbon black content exceeds 65 parts by mass, the low heat generation property may be degraded.

The cross-linking agent may be comprised, for example, of organic peroxide, sulfur-based vulcanizing agent, etc., and may be blended by a content within a range of 0.3 - 3.0 parts by mass, per 100 parts by mass of the rubber component.

The vulcanization accelerator may be comprised, for example, of at least one of sulfenamide-based vulcanization accelerator, thiazole-based vulcanization accelerator, thiuram-based vulcanization accelerator, thiourea-based vulcanization accelerator, guanidine-based vulcanization accelerator, dithiocarbamate-based vulcanization accelerator, aldehyde amine-based vulcanization accelerator, aldehyde ammonia-based vulcanization accelerator, imidazoline-based vulcanization accelerator, or xanthate-based vulcanization accelerator.

In order to improve the workability of the rubber composition, softener may be added to the rubber composition. The softener may be comprised of petroleum softener, such as process oil, lubrication oil, paraffin, liquid paraffin, petroleum asphalt, Vaseline, etc., fatty oil-based softener, such as castor oil, linseed oil, rape seed oil, coconut oil, etc., waxes, such as beeswax, carnauba wax, lanolin, etc., besides tall oil, sub, linoleic acid, palmitic acid, stearic acid, lauric acid, etc.

The rubber composition may contain plasticizer. The plasticizer may be comprised, for example, of DMP (dimethyl phthalate), DEP (diethyl phthalate), DBP (dibutyl phthalate), DHP (diheptyl phthalate), DOP (dioctyl phthalate), DINP (diisononyl phthalate), DIDP (diisodecyl phthalate), BBP (butyl bezy phthalate), DWP (dilauryl phthalate), DCHP (dicyclohexyl phthalate), etc.

There are no particular limitations on the antioxidant agent. Thus, there may be used various types of amine-based or phenol-based antioxidants, which are normally used in the rubber industry.

The rubber composition may contain antiscorching agent for preventing or retarding scorching. The antiscorching agent may be comprised, for example, of organic acid, such as phthalic anhydride, salicylic acid, benzoic acid, etc., nitroso compound, such as N-nitrosodiphenylamine, etc., or N-(cyclohexylthio)phthalimide

Furthermore, it is preferred that the rubber composition contains silane coupling agent. Silane coupling agent serves to realize a strong coupling of rubber component and fillers, such as silica, and to improve the dispersion of white reinforcing agent in the rubber composition. It is preferred that the silane coupling agent comprises, for example, one or more of thiol-based functional group, amine-based functional group, or halogen-based functional group, either alone or in combination.

### < Heavy-duty Tire >

The heavy-duty tire 1 according to the present invention is characterized, as shown in FIG. 1, by the tire side portion 2 that comprises the above-mentioned rubber composition.

According to the present invention, it is necessary for the tire side portions to have an average thickness G (see, FIG. 1) within a range of 8 mm - 150 mm, more preferably within a range of 15 mm - 150 mm. If the average thickness of the tire side portion is less than 8 mm, even though the low heat generation property can be preserved, the anti-cut resistance and suppression of the crack growth toward inside tend to be degraded due to insufficient rubber thickness G in the tire side portion. The upper limit value 150 mm of the average thickness G of the tire side portion 2 is determined since if the average thickness G exceeds 150 mm, the heat generated during the running tends to be accumulated in the tire to degrade the durability. As shown in FIG. 1, the thickness of the tire side portion refers to the distance, as measured in a direction parallel to the tire width direction W, between the outer surface of the ply cords in the tire width direction (or the outer surface of the turn-up ply cords, if any) and the outer surface of the tire. The average thickness is a value obtained by measuring the thickness at different locations and averaging the measured thicknesses as a whole.

As mentioned above, the tire side portion 2 refers to the portion of the tire between the tread end and the bead portion, which is preferably a sidewall portion. This is because it is highly important, from the viewpoint of preventing defects, to improve the anti-cut property and suppress the crack growth toward inside of the tire (i.e., toward the ply cords), in connection with the sidewall portion.

When the above-mentioned rubber composition is applied to the sidewall portion, there are no particular limitations in the configuration of the sidewall portion. Thus, for example, the sidewall portion may be comprised of a single sheet, a plurality of sheets that are laminated with each other, or may be formed of a helically would ribbon-like rubber.

### Examples

The present invention will be described in further details below with reference to specific examples.

### (Invention Examples 1 - 5 and Comparative Examples 1 - 4)

A rubber kneader was used to all the blending components shown in Table 1 below, except sulfur and vulcanization accelerator, for three minutes at a temperature of approximately 150°C. Then, sulfur and vulcanization accelerator were added and kneading was further continued for two minutes at a temperature of approximately 100°C, to produce a rubber sheet with a thickness of 30 mm. From this sheet, the test pieces of the invention examples and the comparative examples were prepared.

### (Evaluation)

The test pieces so obtained were subjected to vulcanization in laboratory (145°C × 90 minutes), before the following tests.

### (1) Heat Generation Property

Rebound tests in accordance with JIS K6301 were conducted to ascertain the modulus of repulsion elasticity (%) at the temperature of 25°C. The results of evaluation of the invention examples and the comparative examples are indicated as indices, with the modulus of repulsion elasticity in the comparative example 1 being the control value that is defined as 100. In this instance, a higher evaluation value represents a lower heat generation property and, hence, better results. [0054]

### (2) Anti-cut Resistance

Falling dart-type cut tester was used to measure the minimum energy (kg·m) required for piercing cutting of the test pieces under the condition of falling dart weight of 15 kg. The results of evaluation of the invention examples and the comparative examples are indicated as indices, with the minimum energy in the comparative example 1 being the control value that is defined as 100. In this instance, a higher evaluation value represents a higher anti-cut resistance and, hence, better results. [0055]

### (3) Crack Growth Toward Inside of Tire

The rubber composition prepared for the invention examples and the comparative examples were applied as the tread rubber. The test tires for the invention examples 1, 3, 4 and 5 and the comparative examples 1 and 3 were prepared to have a size of 24.00R35, the test tires for the invention example 2 and the comparative example 4 were prepared to have a size of 53/80R63, and the test tire for the comparative example 2 was prepared to have a size of 14.00R24, all in customary manner. For each test tire, the average thickness in the tire sidewall portion and the number of rubber sheets forming the sidewall portions are shown in Table 1.

Initial cuts with a depth of 3 mm were made in the sidewall portions of the test tires and the test tires were then subjected to a drum running test (test load: 100% of the specified load, speed: 8 km/h) to measure the arrival time until the cracks reach the ply cords. The results of evaluation of the invention examples and the comparative examples are indicated as indices, with the arrival time in the comparative example 1 being the control value that is defined as 100. In this instance, a higher evaluation value represents a more effective suppression of the crack growth and, hence, better results. The evaluation results are shown in Table 1.

**[Table 1]**

| | | Inv. 1 | Inv. 2 | Inv. 3 | Inv. 4 | Inv. 5 | Comp. 1 | Comp. 2 | Comp. 3 | Comp. 4 |
|---|---|---|---|---|---|---|---|---|---|---|
| Blending conditions of the rubber composition | Natural rubber *1 | 50 | 50 | 30 | 60 | 40 | 50 | 50 | 50 | 50 |
| | Butyl rubber *2 | 50 | 50 | 70 | 40 | 60 | 50 | 50 | 50 | 50 |
| | Carbon black A *3 | 45 | 45 | 50 | 55 | 40 | 45 | 45 | 45 | 45 |
| | Aromatic oil *4 | 3 | 3 | --- | --- | 3 | 3 | 3 | 3 | 3 |
| | Stearic acid *5 | 2 | 2 | 2 | 2 | 2 | 2 | 2 | 2 | 2 |
| | Zinc oxide *6 | 3 | 3 | 3 | 3 | 3 | 3 | 3 | 3 | 3 |
| | Resin *7 | 3 | 3 | 3 | 3 | 3 | 3 | 3 | 3 | 3 |
| | Wax *8 | 2 | 2 | 2 | 2 | 2 | 2 | 2 | 2 | 2 |
| | Antioxidant agent *9 | 3 | 3 | 3 | 3 | 3 | 3 | 3 | 3 | 3 |
| | Platy clay *10 | 15 | 10 | 2 | --- | 5 | --- | 10 | 35 | --- |
| | Platy mica *11 | --- | --- | --- | 10 | --- | 35 | --- | --- | --- |
| | Silane coupling agent *12 | --- | --- | --- | --- | 0.5 | --- | --- | --- | --- |
| | sulfur *13 | 2 | 2 | 1.5 | 1.3 | 1.5 | 2 | 2 | 2 | 2 |
| | Vulcanization promoter *14 | 0. 8 | 0. 8 | 0.8 | 0.7 | 0.8 | 0.8 | 0.8 | 0.8 | 0.8 |
| Sidewall conditions | Number of layered sheets | 3 | 4 | 3 | 3 | 2 | 3 | 2 | 3 | 4 |
| | Thickness (mm) | 10 | 20 | 10 | 10 | 10 | 10 | 6 | 10 | 20 |
| Evaluation | Heat generation property (index) | 120 | 125 | 130 | 115 | 128 | 100 | 125 | 100 | 135 |
| | Anti-cut resistance (index) | 101 | 98 | 105 | 110 | 100 | 100 | 98 | 101 | 85 |
| | Time until crack growth defect (index) | 130 | 175 | 120 | 110 | 128 | 100 | 40 | 100 | 135 |

| | | | | | | | | | | |
|---|---|---|---|---|---|---|---|---|---|---|
| *1 RSS #1 *2 BR150 made by Ube Industries, Ltd. *3 HAF carbon (SEAST NB) made by Tokai Carbon Co., Ltd. (nitrogen- absorbing specific surface area of 71 m²/g and dibutyl phthalate oil absorption of 103 ml / 100 g) *4 Diana process oil AH-24 made by Idemitsu Kosan Co., Ltd. *5 Stearic acid made by NOF Corporation *6 Two types of zinc oxide made by Hakusui Tech Co., Ltd. *7 Ne- resin B-100 made by Nippon Petrochemicals Co., Ltd. *8 Ozoace 0280 made by Nippon Seiro Co., Ltd. *9 Antigen 6C made by Sumitomo Chemical Co., Ltd. * 10 Polyfil DL made by Kamin LLC (average particle size: 4.6 µm) *11 A11 made by Yamaguchii Mica Co., Ltd. (average particle size: 2.2µm) *12 Bis-(triethoxysilylpropyl)-polysulfide *13 HK200 made by Hosoi Chemical Industry Co., Ltd. *14 N-tert-Butyl-2-benzothiazolesulfenamide | | | | | | | | | | |

It has been revealed from the results shown in Table 1 that Invention Examples 1 - 5 are well balanced and excellent, as compared to Comparative Examples 1 - 4, in terms of low heat generation property, anti-cut resistance and suppression of crack growth toward inside of the tire. On the other hand, in the case of Comparative Examples 1 and 3, it has been revealed that, due to an excessive content of the orientation material, the suppression effect against the crack growth toward inside of the tire was lower as compared to Invention Examples 1 - 4. Further, in the case of Comparative Example 2, although the rubber composition was similar to that of Invention Example 2, due to a small thickness of the tire sidewall portion, it has been revealed that the suppression effect against the crack growth toward inside of the tire was significantly low. Finally, in the case of Comparative Example 4, due to the absence of the orientation material, it has been revealed that the anti-cut resistance was low and the suppression effect against the crack growth was insufficient.

### Industrial Applicability

The present invention provides a heavy-duty tire exhibiting satisfactory anti-cut resistance and low heat generation property, as well as excellent resistance to crack growth toward inside of the tire. As a result, it is possible to use the heavy-duty tire for a prolonged time and thereby achieve industrially useful technical effects.

### Reference Numerals

- 1: Heavy-duty tire
- 2: Tire side portion (sidewall portion)
- 10: Rubber component
- 20: Orientation material
- 30: Ply cords

## Claims

1. A heavy-duty tire **characterized by** a tire side portion that comprises a rubber composition containing 0.1 - 30 parts by mass of an orientation material oriented in a circumferential direction of the tire in which a longitudinal direction of the orientation material is substantially aligned with the tire circumferential direction, per 100 parts by mass of a rubber component, wherein the tire side portion has an average thickness of 8 mm - 150 mm,
**characterized in that**:
the orientation material comprises a platy mineral, having an average particle size within a range of 0.2 µm - 10 µm.

2. The heavy-duty tire according to claim 1, **characterized in that** the tire side portion comprises a sidewall portion.

3. The heavy-duty tire according to claim 1 or 2, **characterized in that** the platy mineral has an average particle size within a range of 2 µm - 5 µm.

4. The heavy-duty tire according to any preceding claim, **characterized in that** the platy mineral has a ratio of its longitudinal length to its thickness, said ratio being not less than 8.

5. The heavy-duty tire according to claim 1, **characterized in that** said rubber component contains not less than 25 % by mass of a natural rubber.

6. The heavy-duty tire according to claim 1, **characterized in that** said rubber composition further comprises 30 - 65 parts by mass of carbon black having nitrogen- absorbing specific surface area of 40 m²/g - 120 m²/g and dibutyl phthalate oil absorption of 70 ml / 100 g - 120 ml / 100 g.

## Patentansprüche

1. Reifen für schwere Lasten, **gekennzeichnet durch** einen Reifenseitenabschnitt, welcher eine Gummizusammensetzung umfasst, welche 0,1 - 30 Massenteile eines Ausrichtungsmaterials enthält, welches in einer Reifenumfangsrichtung ausgerichtet ist, in welchem eine Längsrichtung des Ausrichtungsmaterials im Wesentlichen mit der Reifenumfangsrichtung ausgerichtet ist, pro 100 Massenteile eines Gummibestandteils, wobei der Reifenseitenabschnitt eine durchschnittliche Dicke von 8 mm - 150 mm aufweist,
**dadurch gekennzeichnet, dass**:
das Ausrichtungsmaterial ein Flachmineral umfasst, welches eine durchschnittliche Partikelgröße in einem Bereich von 0,2 µm - 10 µm aufweist.

2. Reifen für schwere Lasten nach Anspruch 1, **dadurch gekennzeichnet, dass** der Reifenseitenabschnitt einen Seitenwandabschnitt umfasst.

3. Reifen für schwere Lasten nach Anspruch 1 oder 2, **dadurch gekennzeichnet, dass** das Flachmineral eine durchschnittliche Partikelgröße in einem Bereich von 2 µm - 5 µm aufweist.

4. Reifen für schwere Lasten nach einem der vorhergehenden Ansprüche, **dadurch gekennzeichnet, dass** das Flachmineral ein Verhältnis zwischen seiner longitudinalen Länge und seiner Dicke aufweist, wobei das Verhältnis nicht kleiner als 8 ist.

5. Reifen für schwere Lasten nach Anspruch 1, **dadurch gekennzeichnet, dass** der Gummibestandteil nicht weniger als 25 Massen-% eines natürlichen Kautschuks enthält.

6. Reifen für schwere Lasten nach Anspruch 1, **dadurch gekennzeichnet, dass** die Gummizusammensetzung ferner 30 - 65 Massenteile Ruß mit einer Stickstoffabsorbierenden spezifischen Oberfläche von 40 m²/g - 120 m²/g und einer Absorption von Dibutylphthalatöl von 70 ml/100 g - 120 ml/100 g aufweist.

## Revendications

1. Bandage pneumatique pour poids-lourds, **caractérisé par** une partie latérale du bandage pneumatique comprenant une composition de caoutchouc contenant 0,1 à 30 parties en masse d'un matériau d'orientation orienté dans une direction circonférentielle du bandage pneumatique, dans lequel une direction longitudinale du matériau d'orientation est sensiblement alignée avec la direction circonférentielle du bandage pneumatique, pour 100 parties en masse d'un composant de caoutchouc, dans lequel la partie latérale du bandage pneumatique a une épaisseur moyenne comprise entre 8 mm et 150 mm ;
**caractérisé en ce que** :
le matériau d'orientation comprend un minerai lamellaire, ayant une dimension de particule moyenne comprise dans un intervalle allant de 0,2 µm à 10 µm.

2. Bandage pneumatique pour poids-lourds selon la revendication 1, **caractérisé en ce que** la partie latérale du bandage pneumatique comprend une partie de flanc.

3. Bandage pneumatique pour poids-lourds selon les revendications 1 ou 2, **caractérisé en ce que** le minerai lamellaire a une dimension de particule moyenne comprise dans un intervalle allant de 2 µm à 5 µm.

4. Bandage pneumatique pour poids-lourds selon l'une quelconque des revendications précédentes, **caractérisé en ce que** le minerai lamellaire présente un rapport entre sa longueur longitudinale et son épaisseur, ledit rapport n'étant pas inférieur à 8.

5. Bandage pneumatique pour poids-lourds selon la revendication 1, **caractérisé en ce que** la teneur en caoutchouc naturel dudit composant de caoutchouc ne représente pas moins de 25% en masse.

6. Bandage pneumatique pour poids-lourds selon la revendication 1, **caractérisé en ce que** ladite composition de caoutchouc comprend en outre 30 à 65 parties en masse de noir de carbone comportant une aire de surface spécifique à absorption de l'azote comprise entre 40 m²/g et 120 m²/g et une absorption d'huile de phtalate de dibutyle comprise entre 70 ml/100 g et 120 ml/100g.
